# EUROPÄISCHE PATENTSCHRIFT

(11) **EP 2 561 312 B1**
(45) Veröffentlichungstag und Bekanntmachung des Hinweises auf die Patenterteilung: **22.10.2014**
(21) Anmeldenummer: 11715906.1
(22) Anmeldetag: 14.04.2011
(51) Int. Cl.: G01B 21/04, G01B 7/012, G01B 5/008

(54) **VERFAHREN ZUR KOORDINATENMESSUNG AN WERKSTÜCKEN AUF EINEM KOORDINATENMESSGERÄT**
METHOD FOR MEASURING THE COORDINATES OF WORKPIECES ON A COORDINATE-MEASURING DEVICE
PROCÉDÉ DE MESURE DE COORDONNÉES DE PIÈCES GRÂCE À UN APPAREIL DE MESURE DE COORDONNÉES

(30) Priorität: 23.04.2010 DE 102010018250
(43) Veröffentlichungstag der Anmeldung: 27.02.2013
(73) Patentinhaber: Carl Zeiss Industrielle Messtechnik GmbH, 73447 Oberkochen (DE)
(72) Erfinder: FUCHS, Anton, 89558 Böhmenkirch (DE); KERN, Rudolf, 73430 Aalen (DE)
(74) Vertreter: Henckell, Carsten
(86) Internationale Anmeldenummer: PCT/EP2011/055905
(87) Internationale Veröffentlichungsnummer: WO 2011/131557

(56) Entgegenhaltungen:
- EP-A2- 0 657 715
- WO-A1-00/40921
- WO-A2-2009/112819
- GB-A- 2 045 437
- US-A1- 2005 022 409

## Beschreibung

Die Erfindung betrifft ein Verfahren zur Koordinatenmessung an Werkstücken auf einem Koordinatenmessgerät mit einem Tastkopf, der einen Taster und einen dem Taster zugeordneten Tastsensor enthält, der bei Berührung eines Werkstückes mit dem Taster ein Tastsignal erzeugt, anhand dessen Maßstabswerte ermittelt werden, die die Position des Tastkopfes bei der Berührung des Werkstückes repräsentieren, wobei der Tastkopf zusätzlich einen Beschleunigungssensor enthält, der bei Beschleunigungen des Tastkopfes ein Beschleunigungssignal erzeugt, wobei das Tastsignal und das Beschleunigungssignal zur Auswertung einer Steuer- und Auswerteeinheit zugeführt werden. Die Erfindung betrifft ferner ein entsprechendes Koordinatenmessgerät zur Vermessung von Werkstücken.

Ein solches Verfahren ist bereits bekannt aus der Druckschrift WO 2009/112819 A2 und wird eingesetzt um sogenannte Fehlantastungen zu vermeiden. Bevor auf die konkrete Lösung der Druckschrift WO 2009/112819 A2 eingegangen wird, wird zunächst der Hintergrund solcher Fehlantastungen beschrieben. So verfügten in der Vergangenheit derartige Koordinatenmessgeräte üblicherweise nur über einen Tastsensor beispielsweise in Form eines piezoelektrischen Sensors oder eines Dehnungsmessstreifens, dessen Tastsignal zur Bestimmung des Antastzeitpunktes und damit zur Bestimmung der zugehörigen Maßstabswerte ausgewertet wurde. Hierbei kann es im Messbetrieb bei der Antastung eines Werkstückes durch Beschleunigungen des Tastkopfes dazu kommen, dass der Taster so stark beschleunigt wird, dass der Tastsensor hierdurch ein Tastsignal erzeugt, aufgrund dessen eine Antastung angenommen wird. Beschleunigungen des Tastkopfes, durch die solche Fehlantastungen ausgelöst werden können, können beispielsweise verursacht werden durch Schwingungen des Koordinatenmessgerätes, durch Beschleunigungen der Linearachsantriebe des Koordinatenmessgerätes, durch Beschleunigungen der Drehachsantriebe eines Dreh-Schwenkgelenkes, durch Körperschall oder durch Luftschall. Sogar schlechte Linearachsantriebe des Koordinatenmessgerätes, die einen rauen Lauf bedingen, können bereits zu solchen Fehlantastungen führten.

Um solche Fehlantastungen zu unterdrücken wurden in der Vergangenheit bereits unterschiedliche Triggerbedingungen vorgesehen, die in der Regel kumulativ erfüllt sein müssen, damit eine gültige Antastung vorliegt. Neben dem Überschreiten einer Triggerschwelle durch das Tastsignal wurde beispielsweise als zusätzliche Triggerbedingung eine Überprüfung hinzugefügt, die überprüft, ob das Tastsignal eine vorbestimmte Dauer die Triggerschwelle überschreitet. Bei länger andauernden Beschleunigungen kann es hierbei jedoch ebenfalls zu Fehlantastungen kommen.

Die Druckschrift US 2005/0022409 zeigt in den Figuren 6 und 7 einen so genannten messenden Tastkopf, der über einen Schaft an der Mechanik eines Koordinatenmessgerätes befestigt werden kann. Der messende Tastkopf umfasst hierbei einen Taster mit einem Taststift. Der Taster ist über in unterschiedliche Richtungen biegsame Blattfedern, auf denen jeweils Verformungssensoren befestigt sind, mit einer Platte verbunden. Diese Platte wiederum kann über eine Tastkopf-Aktuatorik relativ zum Schaft in den drei Koordinatenrichtungen verfahren werden. Maßstäbe ermitteln jeweils die Positionen der Platte relativ zum Schaft, die sich durch die Verstellung der Tastkopf-Aktuatorik ergeben. Außerdem ist am Taster noch ein Beschleunigungssensor befestigt. Sofern die Mechanik des Koordinatenmessgerätes den Tastkopf schnell in den Koordinatenrichtungen x, y und z verfährt, werden die Beschleunigungen von dem Beschleunigungssensor aufgenommen und hieraus die Massenträgheitskräfte des Tasters ermittelt. Um zu vermeiden, dass durch die Massenträgheitskräfte des Tasters die tatsächlichen Messkräfte reduziert werden, mit denen der Taststift am Werkstück anliegt, werden die durch den Beschleunigungssensor ermittelten Massenträgheitskräfte von den durch die Verformungssensoren gemessenen Messkräften subtrahiert, wobei ein Controller auf Basis dieses Signals und auf Basis der aktuellen Maßstabswerte der Tastkopf-Aktuatorik und aufgrund von Wegvorgaben durch das Koordinatenmessgerät die Aktuatoren nachregelt.

In unseren US-Patenten US 5,862,604, US 5,526,576 und US 5,425,180 sind Auswerteschaltungen gezeigt, bei denen zum Auslösen einer Antastung nicht nur das Tastsignal zur Triggerung einer Antastung verwendet wird. Vielmehr ist der Taster zusätzlich auch noch auslenkbar am Tastkopf gelagert, wobei ein Schaltelement vorgesehen ist, das bei einer Auslenkung ein Schaltsignal abgibt. Für eine gültige Antastung sind als Triggerbedingungen hierbei erforderlich, dass das Tastsignal eine Triggerschwelle überschreitet, dass das Schaltsignal abgegeben wird und dass das Überschreiten der Triggerschwelle und die Abgabe des Schaltsignals innerhalb eines vorbestimmten Zeitraums erfolgen. Trotz dieser Triggerbedingungen kann es auch hier bei Beschleunigungen des Tastkopfes zu Fehlantastungen kommen. Dies ist der Fall, wenn aufgrund von Beschleunigungen des Tastkopfes das Tastsignal die Triggerschwelle überschreitet und kurz danach tatsächlich eine Antastung stattfindet und hierbei auch das Schaltsignal abgegeben wird. Da die Maßstabswerte aufgrund des Tastsignals ausgelesen werden, liegt dann der hieraus ermittelte Antastzeitpunkt teilweise deutlich vor dem tatsächlichen Antastzeitpunkt, was zu fehlerhaften Messwerten führt.

Zur Vermeidung von solchen beschleunigungsbedingten Fehlantastungen wird in der WO 2009/112819 A2 ein Verfahren vorgeschlagen, bei dem neben dem Tastsensor, der bei Berührung eines Werkstückes mit dem Taster ein entsprechendes Tastsignal abgibt, ein Beschleunigungssensor im Tastkopf vorgesehen ist, der bei Beschleunigungen des Tastkopfes ein Beschleunigungssignal liefert. Um Fehlantastungen zu vermeiden werden für den Fall, dass der Beschleunigungssensor ein Beschleunigungssignal liefert die Triggerbedingungen verändert, aufgrund deren die Maßstabswerte, die die Position des Tastkopfes repräsentieren, festgehalten werden. Insbesondere wird die Höhe eines vordefinierten Schwellwertes erhöht, der vom Tastsignal überschritten werden muss und die Zeitdauer, während dessen der Schwellwert vom Tastsignal überschritten werden muss, um eine vordefinierte Zeit verlängert. Durch das Heraufsetzen des zu überschreitenden Schwellwertes und die Verlängerung der vordefinierten Zeit, während der der Schwellwert überschritten sein muss, bevor eine Übernahme der Maßstabswerte ausgelöst wird führt dazu, dass der Tastkopf "desensibilisiert" wird und dementsprechend der durch den Trigger festgelegte Zeitpunkt der Antastung sich immer weiter vom tatsächlichen Zeitpunkt der Antastung entfernt. Außerdem ändern sich hierdurch kontinuierlich in Abhängigkeit von der Beschleunigung die Bedingungen, unter denen eine Antastung erkannt wird. Hierdurch wird die Antastung ungenauer.

Aufgabe der vorliegenden Erfindung ist es daher ein Verfahren zur Koordinatenmessung der eingangs genannten Art vorzustellen, bei dem fehlerhafte Antastungen verhindert werden ohne die Bedingungen zu verändern, unter denen eine Antastung erkannt wird, sowie ein entsprechendes Koordinatenmessgerät vorzuschlagen, auf dem ein entsprechendes Verfahren realisiert ist.

Die Aufgabe wird gelöst durch ein Verfahren mit den Merkmalen des unabhängigen Anspruches 1, sowie durch ein Koordinatenmessgerät mit den Merkmalen des unabhängigen Anspruches 11.

Die Besonderheit der erfindungsgemäßen Lösung ist hierbei darin zu sehen, dass die Steuer- und Auswerteeinheit die besagten Maßstabswerte in der Weise ermittelt, indem durch Subtraktion des Tastsignals und des Beschleunigungssignals voneinander ein Auswertesignal ermittelt wird, und erst anhand dieses Auswertesignals die Maßstabswerte ermittelt werden, die die Position des Tastkopfes bei der Berührung des Werkstückes repräsentieren. Hierdurch ist es möglich aus dem Tastsignal zumindest zu einem großen Teil diejenigen Anteile zu eliminieren, die durch Beschleunigungen hervorgerufen wurden. Soweit das Tastsignal des Tastsensors nicht durch eine tatsächliche Antastung hervorgerufen wurde, sondern vielmehr durch Beschleunigungen des Tastkopfes so ergibt sich als Ergebnis der Subtraktion ein Signal mit einer sehr geringen Amplitude.

Die Subtraktion des Tastsignals und des Beschleunigungssignals kann im Zeitbereich erfolgen oder aber auch in einem transformierten Bereich, wie beispielsweise im Frequenzbereich.

Die Subtraktion des Tastsignals und des Beschleunigungssignals in der Steuer- und Auswerteeinheit im Zeitbereich kann besonders einfach durch einen analogen Subtrahierverstärker erfolgen, der das analoge Tastsignal des Tastsensors und das analoge Beschleunigungssignal des Beschleunigungssensors voneinander subtrahiert. Ein Subtrahierverstärker ist ein Operationsverstärker, der über Widerstände so beschaltet ist, dass die beiden Signale an den Eingängen des Operationsverstärkers voneinander subtrahiert werden.

Alternativ kann die Subtraktion des Tastsignals und des Beschleunigungssignals in der Steuer- und Auswerteeinheit im Zeitbereich natürlich auch in digitaler Form erfolgen, insbesondere durch einen Mikroprozessor der Steuer- und Auswerteeinheit. Dazu müssen die Signale zunächst über einen Analog-/Digitalwandler in digitale Signale umgewandelt werden, wobei die Subtraktion dann numerisch in einem Mikroprozessor der Steuer- und Auswerteeinheit erfolgt, oder aber auch in einem anderen geeigneten digitalen Baustein.

Die Subtraktion des Tastsignals und des Beschleunigungssignals kann aber auch im Frequenzbereich stattfinden. Dazu fourriertransformiert die Steuer- und Auswerteeinheit das Tastsignal und das Beschleunigungssignal zunächst und erzeugt das Auswertesignal dann durch Subtraktion des fourriertransformierten Tastsignals und des fourriertransformierten Beschleunigungssignals.

Zur Feststellung einer Antastung kann in der Steuer- und Auswerteeinheit das durch die Subtraktion ermittelte Auswertesignal mit wenigstens einer vordefinierten Triggerbedingung verglichen werden. Hier kommen unterschiedlichste Triggerbedingungen in Frage. Die Triggerbedingungen, unter denen eine Antastung festgestellt wird unterscheiden sich hierbei grundsätzlich, ob die Subtraktion im Zeitbereich oder im Frequenzbereich vorgenommen wurde. Soweit die Subtraktion im Zeitbereich vorgenommen wurde sind typische Triggerbedingungen das Überschreiten einer vordefinierten Triggerschwelle, die Dauer, während der eine Triggerschwelle überschritten werden muss oder eine zweistufige Triggerschwelle, wobei die höher liegende Triggerschwelle spätestens innerhalb eines vordefinierten Zeitraums nach dem Überschreiten der tiefer liegenden Triggerschwelle erfolgen muss. Soweit die Subtraktion im Frequenzbereich vorgenommen wurde, sind das Ergebnis der Subtraktion Amplituden in bestimmten Frequenzen. Eine mögliche Triggerbedingung könnte beispielsweise sein, dass die Amplitude von Frequenzen in einem vordefinierten Frequenzband eine vordefmierte Triggerschwelle überschreitet.

Die Steuer- und Auswerteeinheit kann eine Korrekturfunktion aufweisen, die aus dem Verlauf des Auswertesignals den tatsächlichen Antastzeitpunkt der Antastung ermittelt, der vor dem Zeitpunkt liegt, an dem das Auswertesignal eine vordefinierte Triggerbedingung erfüllt, wobei die Steuer- und Auswerteeinheit anhand dieses Antastzeitpunktes die Maßstabswerte ermittelt, die die Position des Tastkopfes bei der Berührung des Werkstückes repräsentieren.

Der Grund für eine solche Korrekturfunktion ergibt sich aus folgendem. Bei einem üblichen gültigen Antastvorgang übersteigt das Auswertesignal, das durch Subtraktion des Tastsignals vom Beschleunigungssignal erzeugt wurde eine in der Tastkopflogik gesetzte Schwelle zu einem Zeitpunkt, der hinreichend genau dem eigentlichen Antastzeitpunkt entspricht. Es gibt jedoch Fälle, in denen im Zeitpunkt der Antastung ein so schwaches Auswertesignal erzeugt wird, dass die in der Tastkopflogik gesetzte Schwelle nicht im Zeitpunkt der Antastung überschritten wird, sondern erst später. Grund hierfür können ungünstige Antastrichtungen oder lange, dünne Taststifte oder Antastungen auf weichem Material sein.

In einem solchen Fall ist es sinnvoll ein Verfahren anzuwenden, mit dem der tatsächliche Zeitpunkt der Antastung aus dem Verlauf des Tastsignals möglichst gut ermittelt wird. Einen Ansatz bietet beispielsweise das in unserem US-Patent US 5,425,180 beschriebene Verfahren, bei dem der Verlauf des Tastsignals mit einem gespeicherten Musterverlauf verglichen oder korreliert wird, wobei hieraus dann der tatsächliche Antastzeitpunkt ermittelt wird und die Maßstabswerte dann zu diesem Zeitpunkt passend ermittelt werden. Anstelle des Tastsignals müsste bei der vorliegenden Erfindung das Auswertesignal mit einem gespeicherten Musterverlauf verglichen oder korreliert werden, wobei hieraus dann der tatsächliche Antastzeitpunkt ermittelt wird.

Ein anderes Verfahren, das sich noch besser zur Korrektur eignet ist das in unserem US-Patent US 5,862,604 beschriebene Verfahren. Gemäß diesem Verfahren wird aus dem Tastsignal der Zeitpunkt der tatsächlichen Antastung abgeleitet, indem das Tastsignal nach der Zeit differenziert wird und aus der ersten oder höheren Ableitungen des Tastsignals der genaue Antastzeitpunkt ermittelt wird. Es werden dann die zu diesem Zeitpunkt vorliegenden Maßstabswerte x, y und z zur weiteren Verarbeitung übernommen. Anstelle des Tastsignals müsste bei der vorliegenden Erfindung das Auswertesignal entsprechend ausgewertet werden.

Die eben beschriebene Korrekturfunktion könnte dauerhaft bei jedem Messvorgang eingesetzt werden. Es hat sich jedoch gezeigt, dass die o.g. Korrekturen bei üblichen Messungen nahezu keine Verbesserung der Messergebnisse bringen. Es macht daher Sinn die besagte Korrekturfunktion nur dann einzuschalten, wenn diese tatsächlich benötigt wird. Um dies zu erreichen kann der Taster auslenkbar am Tastkopf gelagert sein und ein Schaltelement vorgesehen sein, das bei einer Auslenkung ein Schaltsignal abgibt, wobei die Steuer- und Auswerteeinheit die Korrekturfunktion genau dann eingeschaltet, wenn die zeitliche Differenz des Zeitpunktes, zu dem das Auswertesignal eine Triggerbedingung erfüllt und des Zeitpunktes, zu dem das Schaltsignal abgegeben wird einen vordefinierten Wert unterschreitet. Hierdurch werden diejenigen Messungen erfasst, bei denen das Tastsignal erst sehr spät einzelne Triggerbedingungen, wie das überschreiten eines vordefinierten Schwellwertes erfüllt.

Der Tastsensor kann hierbei unterschiedlich ausgebildet sein. Es kann sich hierbei beispielsweise um einen Piezokristall handeln. Alternativ können auch Dehnungsmessstreifen vorgesehen sein. Der Tastsensor kann auch aus mehreren Einzelsensoren bestehen, beispielsweise aus drei versetzt angeordneten Piezosensoren oder drei Dehnungsmessstreifen, damit Antastungen des Tasters in unterschiedlichen Richtungen etwa gleich gut erfasst werden können.

Auch der Beschleunigungssensor kann unterschiedlich ausgestaltet sein. Es kann sich um einen piezoelektrischen Sensor handeln, der einen piezoelektrischen Messgrößenaufnehmer und einen hieran befestigten Massekörper aufweist. Es kann aber auch ein Dehnungsmessstreifen verwendet werden, an dem ein Massekörper befestigt ist, oder ein magnetischer Sensor, bei dem ein an einer Feder aufgehängter Massekörper durch einen Magneten in einer Spule eine elektrische Spannung induziert. Bekannt sind beispielsweise auch miniaturisierte Beschleunigungssensoren, sogenannte mikro-elektro-mechanische Systeme (MEMS), die meist aus Silizium hergestellt werden. Diese Sensoren sind Feder-Masse-Systeme, bei denen die Federn nur wenige µm breite Silizium-Stege sind und auch der Massekörper aus Silizium hergestellt ist, wobei durch die Auslenkung bei Beschleunigung zwischen dem gefedert aufgehängten Teil und einer festen Bezugselektrode eine Änderung der elektrischen Kapazität gemessen werden kann.

Der Beschleunigungssensor kann prinzipiell beliebig ausgestaltet sein und an einer beliebigen Stelle im Bereich des Tastkopfes befestigt sein. Allerdings müssen, damit die oben beschriebene Subtraktion des Tastsignals und des Beschleunigungssignals ein geeignetes Auswertesignal ergeben, das Tastsignal und das Beschleunigungssignal, die bei einer Beschleunigung des Tastkopfes auftreten, relativ ähnlich sein. Diese Ähnlichkeit kann dadurch hergestellt werden, indem das Beschleunigungssignal einer analogen oder digitalen Signalumformung unterzogen wird. Viel einfacher ist es jedoch, wenn der Tastsensor und der Beschleunigungssensor so gestaltet sind, dass diese bei Beschleunigungen nahezu gleiche Signale abgeben. Um dies möglichst gut zu erreichen kann eine oder mehrere der folgenden Maßnahmen vorgenommen werden:
Der Messgrößenaufnehmer des Tastsensors und der Messgrößenaufnehmer des Beschleunigungssensors können gleichartig sein. Hierdurch kann sichergestellt werden, dass gleichartige Kräfte, die auf die Sensoren wirken, zu gleichen Signalen führen.

Zusätzlich kann die Masse des Massekörpers, dessen Beschleunigung durch den Messgrößenaufnehmer des Beschleunigungssensors bestimmt wird, etwa der Masse des Tasters entsprechen. Hierdurch wird zusätzlich erreicht, dass gleichartige Beschleunigungen auf den Taster und auf den Massekörper zu gleichartigen Signalen führen.

Weiterhin kann der Messgrößenaufnehmer des Beschleunigungssensors und der Messgrößenaufnehmer des Tastsensors dieselbe Orientierung aufweisen. Dazu ist der Beschleunigungssensor entsprechend am Tastkopf zu befestigen. Beispielsweise kann der Beschleunigungssensor dazu an der dem Taster gegenüberliegenden Wand des Tastkopfes befestigt sein. Hierdurch geben der Tastsensor und der Beschleunigungssensor bei Beschleunigungen des Tastkopfes nahezu gleiche Signale ab, da der Taster und der Massekörper des Beschleunigungssensors bei Beschleunigungen des Tastkopfes denselben Beschleunigungen unterworfen sind. Die Signale sind dann nur noch in Abhängigkeit vom Abstand der Sensoren phasenverschoben zueinander.

Um auch noch eine gegebenenfalls vorhandene Phasenverschiebung zu eliminieren kann der Beschleunigungssensor in der Nähe des Tastsensors angeordnet sein. Auch hierzu ist der Beschleunigungssensor entsprechend am Tastkopf zu befestigen. Beispielsweise kann der Beschleunigungssensor auf einem Halter befestigt sein, der wiederum innerhalb des Tastkopfgehäuses so befestigt ist, dass der Beschleunigungssensor sich in der nähe des Tastsensors befindet.

Die Steuer- und Auswerteeinheit im Sinne dieser Anmeldung enthält hierbei alle Komponenten, zur Verarbeitung der Signale der zu den Maßstäben gehörigen Leseköpfe, zur Verarbeitung der Signale des Tastkopfes und zur Auswertung der Messergebnisse notwendig sind. Soweit es sich um ein CNC- gesteuertes Koordinatenmessgerät handelt können auch die Komponenten, die zur Erstellung eines Messablaufes und zur Ansteuerung der Antriebe notwendig sind, vorhanden sein. Eine derartige Steuer- und Auswerteeinheiten kann offensichtlich völlig unterschiedlich aufgebaut sein. Beispielsweise können sämtliche Komponenten der Steuer- und Auswerteeinheit in einem einzigen Messrechner untergebracht sein. Soweit besondere elektrische Bauelemente, wie beispielsweise echtzeitfähige Mikroprozessoren oder analoge elektrische Bauelemente erforderlich sind, können diese auf separaten Karten vorgesehen sein, die im Messrechner eingebaut sind. Alternativ können einzelne elektrische Bauelemente der Steuer- und Auswerteeinheit auch im Bereich einzelner Komponenten des Koordinatenmessgerätes, also z.B. im Bereich des Tastkopfes vorgesehen sein. Häufig wurden in der Vergangenheit auch elektrische Bauelemente, wie beispielsweise echtzeitfähige Mikroprozessoren in einem separaten Steuerschrank untergebracht. Die einzelnen Komponenten (Messrechner, Steuerung und lokale Komponenten) kommunizieren miteinander, beispielsweise über einen Bus.

Das Koordinatenmessgerät, auf dem das erfindungsgemäße Verfahren ausgeführt wird kann sehr unterschiedlich ausgestaltet sein. Es kann sich beispielsweise um ein Portalmessgerät, ein Brückenmessgerät, ein Horizontalarmmessgerät, oder ein Messgerät mit Drehgelenken handeln, sodass es auf die Mechanik, mit der der Tastkopf relativ zum Werkstück bewegt wird, nicht ankommt. Entscheidend ist lediglich, dass eine Mechanik vorgesehen ist, über die der Tastkopf relativ zum Werkstück bewegt werden kann. Die Mechanik kann auch so ausgebildet sein, dass das Werkstück bewegt wird und der Tastkopf in Ruhe bleibt. In diesem Fall sind unter den "Maßstabswerten, die die Position des Tastkopfes bei der Berührung des Werkstückes repräsentieren" die gemessenen Maßstabswerte der beweglichen Messauflage des Werkstückes zu verstehen.

Der Vollständigkeit halber sei angemerkt, dass aus den ermittelten Maßstabswerten, die die Position des Tastkopfes bei Berührung des Werkstückes definieren, erst die Messpunkte auf der Werkstückoberfläche abgeleitet werden. Dies geschieht üblicherweise durch Verrechnung der Maßstabswerte mit der kalibrierten Geometrie des Tasters (Beispielsweise die Lage des Tastkugelmittelpunktes im Maschinenkoordinatensystem und dem Tastkugelradius) und der Antastrichtung.

Weitere Vorteile der Erfindung ergeben sich aus der nachfolgenden Beschreibung von Ausführungsbeispielen anhand der Figuren 1 - 27 der beigefügten Zeichnungen. So ist den Figuren nachfolgendes zu entnehmen:
- Figur 1: zeigt beispielhaft ein Koordinatenmessgerät, in dem das erfindungsgemäße Verfahren realisiert ist
- Figur 2: zeigt ist ein vereinfachtes Blockschaltbild, das die wesentlichen für die Signalverarbeitung entsprechend dem erfindungsgemäßen Verfahren erforderlichen Komponenten gemäß einem Ausführungsbeispiel mit einem analogen Subtrahierverstärker 66 zeigt.
- Figuren 3-6: zeigen die wesentlichen Signale einer Signalverarbeitung gemäß Figur 2 bei einer regulären Antastung eines Werkstückes.
- Figuren 7-10: zeigen die wesentlichen Signale einer Signalverarbeitung gemäß Figur 2 bei einer fehlerhaften Antastung.
- Figur 11: zeigt ist ein vereinfachtes Blockschaltbild, das die wesentlichen für die Signalverarbeitung des Tastsignals entsprechend dem erfindungsgemäßen Verfahren erforderlichen Komponenten gemäß einem grundsätzlich zweiten Ausführungsbeispiel zeigt, bei dem die Subtraktion digital erfolgt.
- Figuren 12-17: zeigen die wesentlichen Signale einer Signalverarbeitung gemäß Figur 11 bei einer regulären Antastung eines Werkstückes.
- Figuren 18-23: zeigen die wesentlichen Signale einer Signalverarbeitung gemäß Figur 11 bei einer fehlerhaften Antastung.
- Figuren 24-27: zeigen die wesentlichen Signale einer gegenüber Figur 11 modifizierten Signalverarbeitung mit einer Korrekturfunktion.

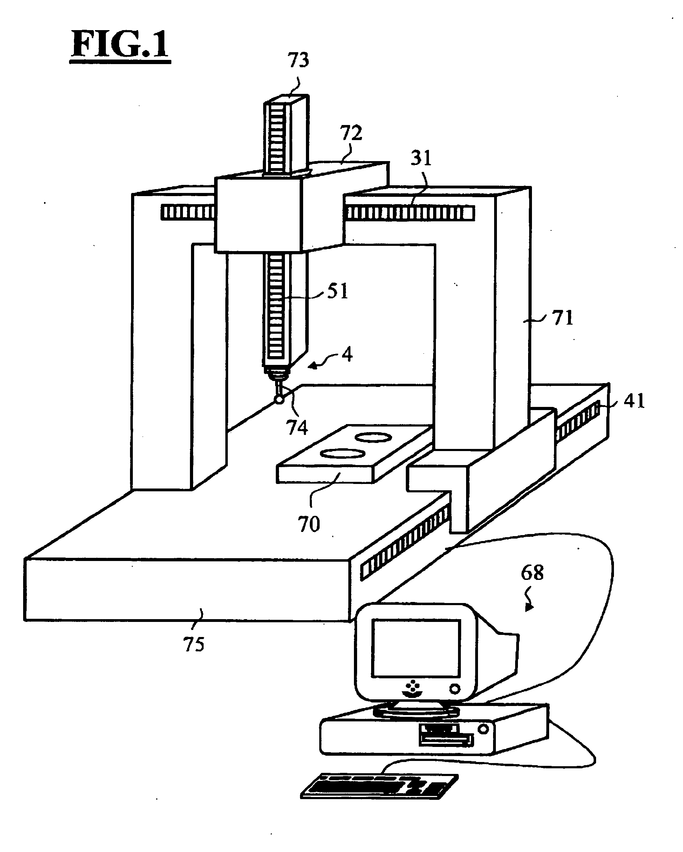

Figur 1 zeigt rein beispielhaft den Aufbau eines Koordinatenmessgerätes. Zur Vermessung eines Werkstückes 70, das auf einem Messtisch 75 aufliegt, ist entlang des Messtisches 75 ein Portal 71 verschiebbar gelagert, wobei die Position des Portals 71 in dieser Messrichtung (hier als y-Richtung bezeichnet) über einen Maßstab 41 und einen zugeordneten Ablesekopf (hier nicht sichtbar) ermittelt werden kann. Das Portal 71 ist über einen ebenfalls nicht sichtbaren Antrieb in dieser Messrichtung angetrieben. Entlang der Oberseite des Portals ist ein x-Schlitten72 verschiebbar gelagert (hier mit x-Richtung bezeichnet), wobei die Position dieses Messschlittens 72 über einen Maßstab 31 und einen nicht sichtbaren Ablesekopf auslesbar ist. Der x-Schlitten 72 ist über einen nicht sichtbaren Antrieb angetrieben. Entlang dieses x-Schlittens wiederum ist in vertikaler Richtung (hier als z-Richtung bezeichnet) eine Pinole 73 verschiebbar gelagert, deren vertikale Position über einen Maßstab 51 und einen zugeordneten Ablesekopf (hier ebenfalls nicht sichtbar) bestimmt werden kann. Auch die Pinole 73 ist über einen nicht näher sichtbaren Antrieb angetrieben. Am unteren Ende der Pinole 73 ist ein Tastkopf 4 mit einem Taster 74 befestigt, wobei bei einer Antastung des Werkstückes 70 mit dem Taster 74 eine Antastung in der unten beschriebenen Weise festgestellt wird und hierüber die Maßstabswerte der Maßstäbe 31, 41 und 51 ermittelt werden, die die Position des Tastkopfes 4 definieren und aus denen aus der bekannten Geometrie des Tasters 74 und aus der Antastrichtung die exakte Position des angetasteten Messpunktes auf der Werkstückoberfläche ermittelt wird. Das Portal 71, der x-Schlitten 72 und die Pinole 73 bilden hiermit also die Mechanik, über die der Tastkopf 4 relativ zum Werkstück 70 bewegt werden kann.

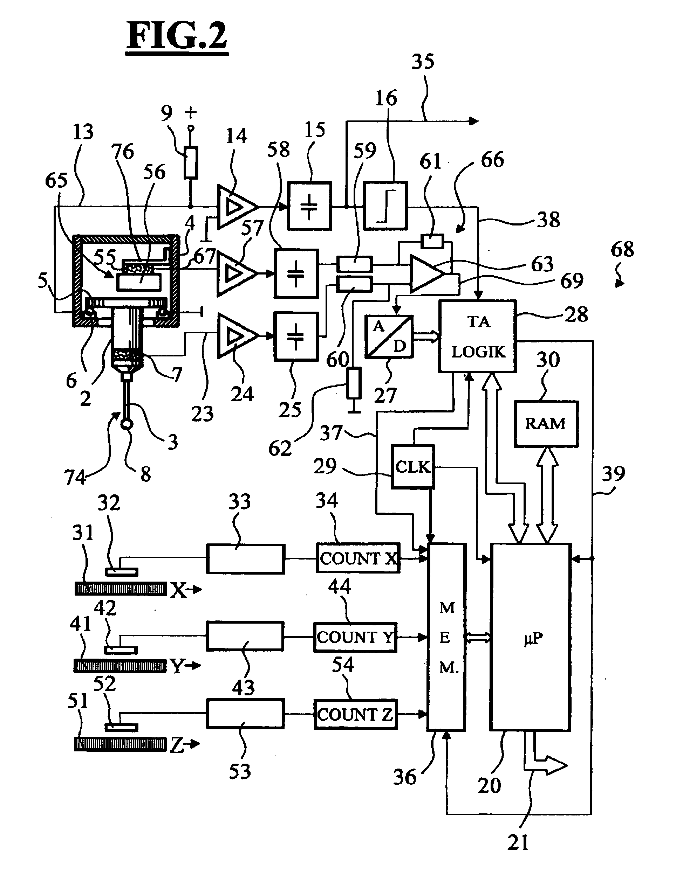

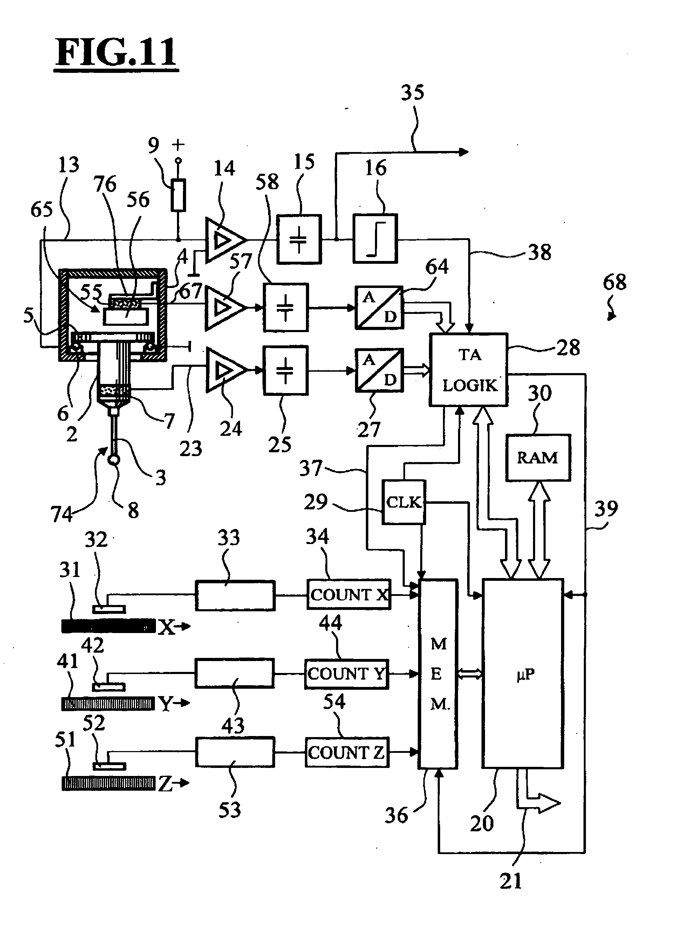

Das Koordinatenmessgerät weist ferner eine Steuer- und Auswerteeinheit 68 auf, von der hier nur ein Messrechner zu sehen ist. Die in Figur 1 gezeigte rein beispielhafte Steuer- und Auswerteeinheit 68 enthält alle Komponenten, die zur Erstellung eines Messablaufes, zur Ansteuerung der Antriebe, zur Verarbeitung der Signale der zu den Maßstäben 31, 41 und 51 gehörigen Leseköpfe, zur Verarbeitung der Signale des Tastkopfes 4 und zur Auswertung der Messergebnisse notwendig sind. Wie eingangs bereits ausführlich erläutert, kann eine solche Steuer- und Auswerteeinheit 68 völlig unterschiedlich aufgebaut sein. Handelt es sich bei dem Koordinatenmessgerät beispielsweise um ein manuelles Koordinatenmessgerät ohne Antriebe, so enthält die Steuer- und Auswerteeinheit 68 weder Komponenten zur Erstellung eines Messablaufes noch Komponenten zur Ansteuerung von Antrieben. Auch der Aufbau kann völlig unterschiedlich sein. Beispielsweise könnten prinzipiell sämtliche elektronischen Bauelemente der Steuer- und Auswerteeinheit 68 in einem Messrechner untergebracht sein, wie in Figur 1 gezeigt. Soweit besondere elektrische Bauelemente, wie beispielsweise echtzeitfähige Mikroprozessoren oder analoge elektrische Bauelemente erforderlich sind, können diese auf Karten vorgesehen sein, die im Messrechner eingebaut sind. Wie weiter unten im Zusammenhang mit Figuren 2 und 11 dargestellt, kann diese Steuer- und Auswerteeinheit 68 jedoch auch im Bereich der Komponenten des Koordinatenmessgerätes, also z.B. im Bereich des Tastkopfes 4 elektrische Bauelemente, wie analoge elektrische Bauteile (z.B. Verstärker, Filter, Analog-/Digitalwandler) oder digitale Bauteile, wie Mikroprozessoren umfassen. Außerdem wurden in der Vergangenheit häufig auch ganze Baugruppen, wie beispielsweise echtzeitfähige Mikroprozessoren in einem separaten Steuerschrank untergebracht, wobei die einzelnen Komponenten (Messrechner, Steuerung und lokale Komponenten) miteinander kommunizieren.

In der Figur 2 ist der Tastkopf 4 vom schaltenden Typ des Koordinatenmessgerätes nach Figur 1 vereinfacht dargestellt. Wie man sieht ist der aus Taststift 3 und der Tastkugel 8 bestehende Taster 74 an einem nachgiebig auf Kugeln 6 gelagerten Träger 2 befestigt. Was die Lagerung anbetrifft, so bilden drei Zylinderkörper an der Unterseite des Bunds 5 am Träger 2, die in drei jeweils um 120° versetzt angeordnete Kugelpaare am gehäusefesten Teil des Tastkopfes 4 eingreifen, eine elektrische Reihenschaltung. Beim Auslenken des Tasters 74 nach Berührung seiner Tastkugel 8 mit dem Werkstück öffnet mindestens einer der drei Schalter der Reihenschaltung, wodurch ein elektrisches Schaltsignal erzeugt wird. Die Signalleitung dieses ersten Schaltsignals ist mit 13 bezeichnet. Dieses Schaltsignal wird auch als MECHK, für mechanischer Kontakt bezeichnet. Das Schaltsignal 13 gelangt über eine Verstärkerstufe 14 und eine Filterstufe 15 sowie eine Impulsformerstufe 16 zur Tastkopflogik 28.

Weiterhin besitzt der Tastkopf 4 im Träger 2 für den Taster 74 (Taststift 3 mit seiner Tastkugel 8) einen Tastsensor 7, der hier als piezoelektrischer Sensor ausgebildet ist und der über eine zweite Signalleitung 23 sein Tastsignal an den Eingang eines zweiten Vorverstärkers 24 übermittelt. Natürlich ist die Ausbildung als piezoelektrischer Sensor vollkommen beispielhaft. Alternativ können natürlich auch andere Sensoren verwendet werden. In betracht kommt beispielsweise ein Dehnungsmessstreifen.

Dem Verstärker 24 ist ein Hochpassfilter 25 nachgeschaltet, das den reinen Gleichanteil des Tastsignals 23 abblockt. Anstelle des Hochpassfilters 25 kann auch ein Bandpass verwendet werden. Das Tastsignal 23 passiert dann, sofern eine reguläre Antastung vorliegt praktisch unverändert einen Operationsverstärker 63, der durch Widerstände 59, 60, 61 und 62 als Subtrahierverstärker beschaltet ist. Dieser Subtrahierverstärker subtrahiert vom Tastsignal 23 des Tastsensors 7 das Beschleunigungssignal 67 eines Beschleunigungssensors 65. Näheres hierzu wird weiter unten ausführlich erläutert. Das aus dem als Subtrahierverstärker beschalteten Operationsverstärker 63 ausgehende Signal wird über die Leitung 69 an einen Analog-/Digitalwandler 27 geleitet. Dieses Signal wird im Folgenden als Auswertesignal 69 bezeichnet und weiter unten detailliert erläutert.

Der Ausgang des Analog-/Digitalwandlers 27 ist mit der Tastkopflogik 28 verbunden und leitet an die Tastkopflogik das digitalisierte Auswertesignal 69. Die Tastkopflogik 28 enthält einen Prozessor zur Vorverarbeitung des Auswertesignals 69 sowie einen rollierenden Speicher, in dem der zeitliche Verlauf des Auswertesignals 69 über einen geeigneten Zeitraum gespeichert wird, d.h. in diesem Speicher steht der zeitliche Verlauf des Auswertesignals 69 eines definierten Zeitraums auf Abruf durch einen Mikroprozessor 20 bereit.

Wie oben in Zusammenhang mit Figur 1 beschrieben, ist der Tastkopf 4 selbst an der beweglichen Pinole 73 des Koordinatenmessgerätes befestigt. Den drei Messschlitten des Koordinatenmessgerätes sind zur Erfassung der Längenmesswerte in den drei Koordinatenrichtungen x, y und z die drei Maßstäbe 31, 41 und 51 zugeordnet, die von Leseköpfen 32, 42 und 52 abgetastet werden. Die von den Leseköpfen gelieferten Signalfolgen der inkrementellen Meßsysteme sind nach digitaler Interpolation in drei Interpolatoren 33, 43 und 53 Zählerbausteinen 34, 44 und 54 zugeführt. Die Zählerausgänge sind mit einer zweiten rollierenden Speichereinheit 36 verbunden, in der dann der zeitliche Verlauf der Zählerstände über einen vordefinierten Zeitraum abgelegt wird. Beide rollierenden Speicher, Speicher 36 und der rollierende Speicher in der Tastkopflogik 28 sind mit dem Mikroprozessor 20 über den Taktgeber 29 synchronisiert, so dass die exakte zeitliche Beziehung zwischen dem Verlauf des Auswertesignals 69 und der Position des Tastkopfs 4 gewährleistet ist.

Bei einem Antastvorgang erzeugt der Tastsensor 7 ein Tastsignal 23, das nach dem Durchgang durch den Hochpass 25 an den Subtrahierverstärker 66 gelangt. Wie weiter unten noch ausführlich erläutert, erzeugt der Beschleunigungssensor 65 bei einer regulären Antastung nahezu kein Signal, so dass das am Ausgang des Subtrahierverstärkers 66 anliegende Auswertesignal 69 nahezu dem Tastsignal 23 entspricht. Dieses Auswertesignal 69 wird vom Analog-/Digitalwandler 27 digitalisiert und überschreitet dann eine in der Tastkopflogik 28 gesetzte Schwelle. Durch das Überschreiten der gesetzten Schwelle wird in der Tastkopflogik 28 ein Signal NIM ausgelöst, das über einen vorbestimmten Zeitraum gehalten wird. Das geschieht bei einer üblichen Antastung zu einem Zeitpunkt, der etwa dem eigentlichen Antastzeitpunkt entspricht, zu dem das zu vermessende Werkstück 70 erstmalig von der Tastkugel 8 berührt wurde, nämlich dann, wenn die Signalintensität durch die sich aufbauende Messkraft zwischen Kugel 8 und Werkstück 70 die eingestellte Schwelle erreicht. Zu diesem Zeitpunkt wird der rollierende Speicher in der Tastkopflogik 28 und auch der rollierende Speicher 36 über die Signalleitung 37 "eingefroren". Die Tastkopflogik 28 wartet jetzt auf das Schaltsignal 13 (MECHK) aus den sich noch etwas später öffnenden Lagerstellen 6 des Tastkopfs. Wenn dieses Signal MECHK auf der Leitung 38 eintrifft, gibt die Tastkopflogik 28 den Antastvorgang "gültig" und schickt einen entsprechenden Signalimpuls über die Signalleitung 39 an einen Digitaleingang des Mikroprozessors 20. Insoweit weist die Schaltung als Triggerbedingungen für das Auslösen einer Antastung folgendes auf:
- das Überschreiten einer Schwelle durch das Auswertesignal,
- das Vorliegen des Schaltsignals 13 (MECHK) und
- das Überschreiten der Schwelle durch das Auswertesignal und das Vorliegen des Schaltsignals passiert innerhalb eines vordefinierten Zeitraums.

Sobald die Tastkopflogik 28 den Antastvorgang "gültig" gegeben hat und einen entsprechenden Signalimpuls über die Signalleitung 39 an den Digitaleingang des Mikroprozessors 20 gesandt hat, wird das im Speicher der Tastkopflogik 28 zwischengespeicherte Auswertesignal 69 und die im Speicher 36 vorhandenen zeitlichen Verläufe der Längenmesswerte x, y und z vom Mikroprozessor 20 aus den rollierenden Zwischenspeichern 28 und 36 geholt und in einem flüchtigen Speicher 30 abgelegt. Die weitere Verarbeitung der abgerufenen Messwerte erfolgt dann gemäß einem in der Firmware des Mikroprozessors 20 programmiertem Ablauf. In diesem Ablauf wird zu dem Zeitpunkt, zu dem das Auswertesignal 69 die Schwelle überschritten hat und dadurch das Signal NIM erzeugt hat die zu diesem Zeitpunkt vorliegenden Messwerte aus dem Speicher 30 ermittelt und als Messwerte x, y und z zur weiteren Verarbeitung ausgegeben.

Im tatsächlichen Betrieb kann es bei der eben beschriebenen Antastung eines Werkstückes 70 beispielsweise durch Beschleunigungen, wie beispielsweise Körperschall oder Luftschall zu Störungen kommen, die Fehler im Messablauf verursachen. Beispielsweise können solche Störungen durch schlechte Antriebe des Koordinatenmessgerätes verursacht werden, die einen rauen Lauf des Koordinatenmessgerätes bedingen. Dies führt zu einem Vibrieren des Tasters 74, so dass der Tastsensor 7 ein fehlerhaftes Tastsignal 23 zur Folge hat. Dies konnte in der Vergangenheit dazu führen, dass in der Tastkopflogik 28 die vordefinierte Schwelle von dem resultierenden Tastsignal überschritten wird, hierdurch das Signal NIM in der Tastkopflogik 28 über einen vordefinierten Zeitraum erzeugt wird und der rollierende Speicher in der Tastkopflogik 28 und auch der rollierende Speicher 36 über die Signalleitung 37 "eingefroren" werden. Sofern auf ein solches fehlerhaftes NIM-Signal kein Schaltsignal 13 (MECHK) erfolgt, ist dies unproblematisch, weil die Antastung als ungültig verworfen wird. Problematisch wird es allerdings, wenn nach der fehlerhaften Erzeugung des Signals NIM dann tatsächlich eine Antastung erfolgt und das Schaltsignal 13 (MECHK) aus den sich öffnenden Lagerstellen 6 des Tastkopfs 4 innerhalb des erwarteten Zeitraums erfolgt. Hierdurch wird eine Antastung zu einem Zeitpunkt angenommen der teilweise wesentlich früher liegt, als der tatsächliche Antastzeitpunkt. Dies kann zu gravierenden Messfehlern führen.

Um derartige Fehlantastungen zu vermeiden ist im gehäusefesten Teil des Tastkopfes 4 ein Beschleunigungssensor 65 vorgesehen, der hier rein beispielhaft aus einem Massekörper 56 und einem piezoelektrischen Messgrößenaufnehmer 55 besteht. Soweit beispielsweise infolge von schlechten Antrieben des Koordinatenmessgerätes oder von Schall der Tastkopf 4 zu Schwingungen angeregt wird, erzeugt der Beschleunigungssensor 65 (Massekörper 56 und piezoelektrischer Messgrößenaufnehmer 55) ein elektrisches Beschleunigungssignal 67, das über einen Vorverstärker 57 und ein Hochpassfilter 58 auf den zweiten Eingang des Subtrahierverstärkers 66 (Operationsverstärker 63, der durch Widerstände 59, 60, 61 und 62 als Subtrahierverstärker beschaltet ist) aufgeschaltet ist. Der Subtrahierverstärker 66 (Operationsverstärker 63 und Widerstände 59, 60, 61 und 62) subtrahiert nun das Tastsignal 23 des Tastsensors 7 vom Beschleunigungssignal 67 des Beschleunigungssensors 65 und leitet das resultierende Auswertesignal 69, das durch Subtraktion des Tastsignals 23 und des Beschleunigungssignals 67 erstellt wurde an den Analog-Digitalwandler 27 weiter, der das Auswertesignal digitalisiert und zur oben bereits beschriebenen Auswertung an die Tastkopflogik 28 weiterleitet.

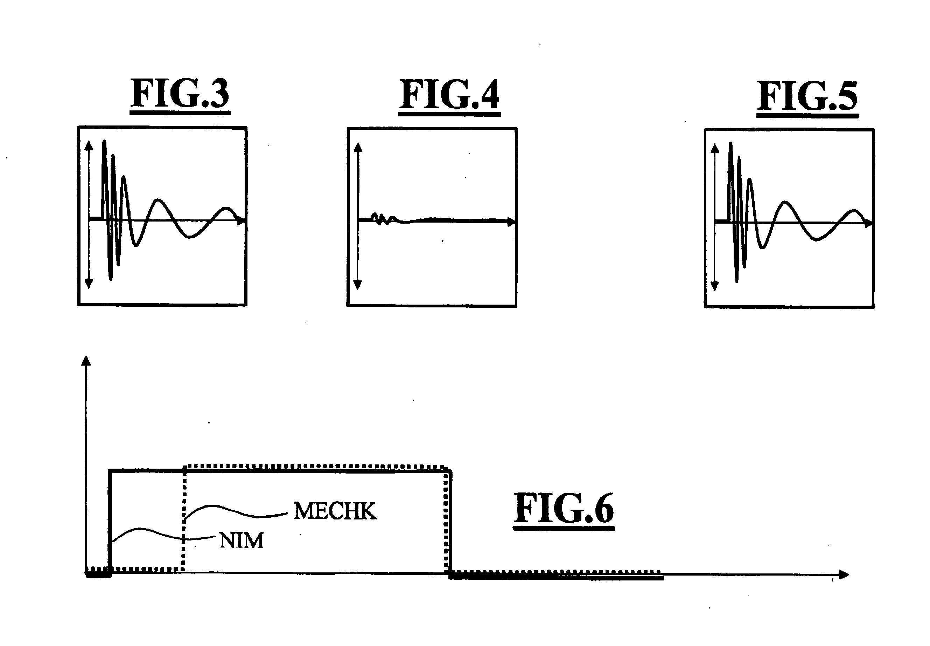

Die Folge hiervon wird im Folgenden anhand der Figuren 3 bis 6 für eine gültige Antastung näher erläutert. So zeigt Figur 3 das Tastsignal 23 des Tastsensors 7 und Figur 4 das Beschleunigungssignal 67 des Beschleunigungssensors 65 bei einer regulären Antastung eines Werkstückes70. Wie hieraus zu sehen erzeugt der Tastsensor 7 durch die Antastung ein Signal mit einer großen Amplitude, während die Amplitude des Beschleunigungssignals 67 sehr klein ist. Der Subtrahierverstärker 66 erzeugt bei der Subtraktion des Tastsignals 23 und des Beschleunigungssignals 67 das in Figur 5 zu sehende Auswertesignal, das in Figur 2 mit dem Bezugszeichen 69 bezeichnet ist. Dieses Auswertesignal 69 weist, wie aus Figur 5 zu sehen, eine relativ große Amplitude auf, wobei dieses Auswertesignal an den Eingang des Analog-/Digitalwandlers 27 gelangt, der das Auswertesignal 69 digitalisiert und an die Tastkopflogik 28 weiterleitet. Das so generierte und digitalisierte Signal 69 überschreitet die in der Tastkopflogik 28 gesetzte Schwelle, sodass innerhalb der Tastkopflogik 28 das in Figur 6 als durchgezogene Linie sichtbare Signal NIM generiert wird, wobei zu diesem Zeitpunkt, wie oben bereits ausgeführt, der rollierende Speicher in der Tastkopflogik 28 und auch der rollierende Speicher 36 über die Signalleitung 37 "eingefroren" werden. Das Schaltsignal 13 (auch als MECHK bezeichnet) aus den sich noch etwas später öffnenden Lagerstellen 6 des Tastkopfs 4, auf das die Tastkopflogik 28 jetzt wartet, ist in Figur 6 als strichliniertes Signal eingezeichnet. Nachdem nunmehr beide Signale während eines überlappenden Zeitraums vorhanden sind, gibt die Tastkopflogik 28 den Antastvorgang "gültig" und schickt einen entsprechenden Signalimpuls über die Signalleitung 39 an einen Digitaleingang des Mikroprozessors 20, der die Signale, wie oben beschrieben, weiterverarbeitet. Die Triggerbedingungen "Überschreiten der vordefinierten Schwelle durch das Auswertesignal", "Vorliegen des Schaltsignals 13 (MECHK)" und "Überschreiten der Schwelle durch das Auswertesignal und Vorliegen des Schaltsignals 13 (MECHK) in einem vordefinierten Zeitraum" sind hiermit also erfüllt.

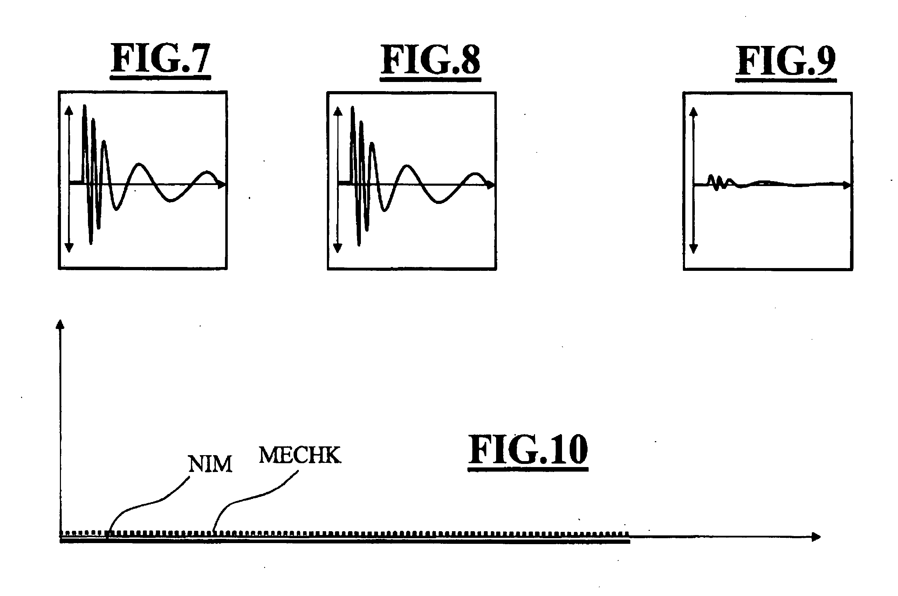

Im Falle dass es zu Fehlern kommt, ergibt sich das, was in den Figuren 7 bis 10 dargestellt ist. Hier wird gezeigt, was passiert, sofern beispielsweise schlechte Antriebe des Koordinatenmessgerätes oder Schall den Tastkopf 4 mit dem hieran befestigten Taster 74 zu Schwingungen anregen. So zeigt Figur 7 das Tastsignal 23 der Tastsensors 7 und Figur 8 das korrespondierende Beschleunigungssignal 67 des Beschleunigungssensors 65 im Fehlerfalle. Wie hieraus zu sehen ist, würde das Tastsignal 23 des Tastsensors 7 in der Tastkopflogik 28 die Schwelle überschreiten, die zur Auslösung einer Antastung notwendig ist, obwohl tatsächlich keine Antastung vorliegt. Dies würde dann zu einem Fehler führen, wenn zu einem etwas später liegenden Zeitpunkt tatsächlich das Werkstück 70 angetastet würde und hierbei innerhalb des Zeitraums, den das Signal NIM gehalten wird, das Schaltsignal 13 (MECHK) eingeht.

Im Falle der erfindungsgemäßen Schaltung gemäß Figur 2 hingegen liefert jedoch auch der Beschleunigungssensor 65 ein Beschleunigungssignal 67 mit einer relativ großen Amplitude, wie aus Figur 8 zu sehen ist. Der Subtrahierverstärker 66 erzeugt daher bei der Subtraktion der beiden Signale das in Figur 9 zu sehende Auswertesignal 69 mit einer sehr kleinen Amplitude, wobei dieses Signal an den Eingang des Analog-/Digitalwandlers 27 gelangt, der das Auswertesignal 69 digitalisiert und an die Tastkopflogik 28 weiterleitet. Das so generierte und digitalisierte Auswertesignal 69 überschreitet die in der Tastkopflogik 28 gesetzte Schwelle nicht, sodass eine Antastung nicht angenommen wird und dementsprechend der rollierende Speicher in der Tastkopflogik 28 und auch der rollierende Speicher 36 über die Signalleitung 37 nicht "eingefroren" werden. Kommt es einige Millisekunden später tatsächlich zu einer Antastung, so können hierbei gültige Messwerte erzeugt werden.

Hinsichtlich des Beschleunigungssensors 65 ist folgendes anzumerken. Dieser ist hier so ausgestaltet, dass sich im vorliegenden Fall bestmögliche Ergebnisse erzielen lassen. Zum einen ist der Massekörper 56 hier so bemessen, dass dessen Masse etwa der Masse des Tasters 74 entspricht. Außerdem wurden beim Beschleunigungssensor 65 und beim Tastsensor 7 zwei identische Messgrößenaufnehmer verwendet, nämlich zwei identisch aufgebaute piezoelektrische Kristalle 7 und 55. Der Beschleunigungssensor 65 wurde hierbei so angeordnet, dass Beschleunigungen des Massekörpers 56 zu Beschleunigungssignalen 67 des Beschleunigungssensors 65 führen, die nahezu identisch zu denjenigen Tastsignalen 23 des Tastsensors 7 sind, die sich bei gleichen Beschleunigungen des Tasters 74 ergeben. Dazu ist der Messgrößenaufnehmer 55 des Beschleunigungssensors 65 so angeordnet, dass dieser dieselbe Orientierung aufweist wie der Messgrößenaufnehmer 7 des Tastsensors 7. Außerdem ist der Beschleunigungssensor 65 in der Nähe des Tastsensors 7 befestigt. Dies ist in dem gezeigten Tastkopf 4 dadurch realisiert, indem der Beschleunigungssensor 65 an einem Halter 76 befestigt ist, der wiederum am Tastkopfgehäuse des Tastkopfes 4 befestigt ist.

Natürlich muss der Beschleunigungssensor 65 aber nicht wie gezeigt ausgeführt sein. Anstelle des hier gezeigten piezoelektrisch arbeitenden Beschleunigungssensors 65 (piezoelektrischer Messgrößenaufnehmer 55 mit Massekörper 56) kann beispielsweise ein beliebiger anderer Beschleunigungssensor verwendet werden. Beispielsweise ein Dehnungsmessstreifen, an dem ein Massekörper befestigt ist, oder ein magnetischer Sensor, bei dem ein an einer Feder aufgehängter Massekörper durch einen Magneten in einer Spule eine elektrische Spannung induziert. Bekannt sind beispielsweise auch miniaturisierte Beschleunigungssensoren, sogenannte mikro-elektro-mechanische Systeme (MEMS), die meist aus Silizium hergestellt werden. Diese Sensoren sind Feder-Masse-Systeme, bei denen die Federn nur wenige µm breite Silizium-Stege sind und auch der Massekörper aus Silizium hergestellt ist, wobei durch die Auslenkung bei Beschleunigung zwischen dem gefedert aufgehängten Teil und einer festen Bezugselektrode eine Änderung der elektrischen Kapazität gemessen werden kann. Auch kann der Beschleunigungssensor 65 an einer anderen Stelle des Tastkopfes 4 befestigt sein. Auch die Masse des Massekörpers 56 muss nicht mit der Masse des Tasters 74 übereinstimmen. Bei derartigen Modifikationen muss aber das Signal des Beschleunigungssensors 65 beispielsweise durch analoge Bauelemente, wie Beispielsweise entsprechend beschaltete Operationsverstärker, Filter oder über digitale Signalbearbeitung in einem Mikroprozessor so aufbereitet werden, dass sich bei einer Beschleunigung des Massekörpers 56 und bei einer Beschleunigung des Tasters 74 durch den Beschleunigungssensor 65 und den Tastsensor 7 ähnliche Signale ergeben.

Figur 11 zeigt ein weiteres vereinfachtes Blockschaltbild einer grundsätzlichen anderen Ausführungsvariante einer Signalverarbeitung, entsprechend dem erfindungsgemäßen Verfahren. Der Aufbau dieser Signalverarbeitung ist relativ ähnlich zum Aufbau der Signalverarbeitung nach Figur 2, wobei die entsprechenden Komponenten in Figur 11 mit denselben Bezugszeichen versehen wurden, wie diejenigen in Figur 2. Im Unterschied zu Figur 2 fehlt in Figur 11 der Subtrahierverstärker 66 (Operationsverstärker 63, der durch Widerstände 59, 60, 61 und 62 entsprechend beschaltet ist). Anstelle dessen wird das Signal 67 des Beschleunigungssensors 65 hier direkt auf einen separaten Analog-/Digitalwandler 64 aufgeschaltet, der das Beschleunigungssignal 67 des Beschleunigungssensors 65 digitalisiert und an die Tastkopflogik 28 weiterreicht. Außerdem ist auch die Software innerhalb der Tastkopflogik 28 und im Mikroprozessor 20 anders ausgestaltet, wie dies im Folgenden erläutert werden wird.

Bei einer ersten Arbeitsweise der Signalverarbeitung nach Figur 11 arbeitet die Schaltung ganz analog zur Schaltung nach Figur 2, wobei anstelle des Subtrahierverstärkers 66 aus Figur 2 die Subtraktion des Tastsignals 23 aus dem Tastsensor 7 und des Beschleunigungssignals 67 aus dem Beschleunigungssensor 65 in digitaler Form durch einen Mikroprozessor innerhalb der Tastkopflogik 28 vorgenommen wird, sodass das oben im Zusammenhang mit Figuren 3 bis 6 und Figuren 7 bis 10 gezeigte Verfahren völlig analog in digitaler Form durchgeführt wird. Der einzige Unterschied liegt darin, dass das in Figur 3 bzw. in Figur 7 gezeigte Tastsignal 23 des Tastsensors 7 und das in Figur 4 und Figur 8 gezeigte Beschleunigungssignal 67 des Beschleunigungssensors 65 in Form von diskreten digitalisierten Werten vorliegt und dass das durch Subtraktion dieser Signale entstehende Auswertesignal, das in Figuren 5 und 9 gezeigt ist, durch eine digitale Subtraktion im Mikroprozessor der Tastkopflogik 28 berechnet wurde.

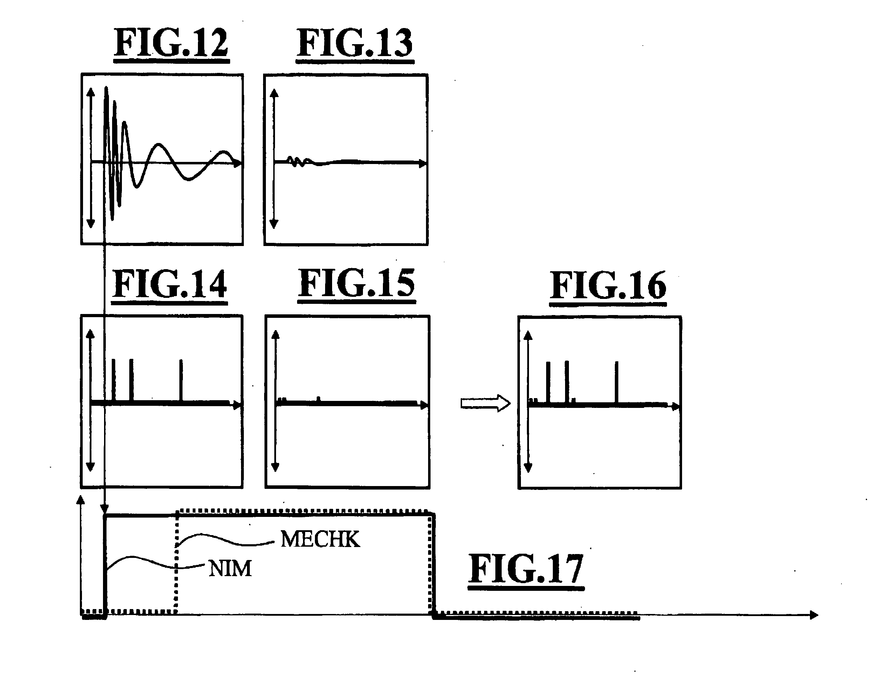

In den bislang im Zusammenhang mit den Figuren beschriebenen Ausführungsbeispielen erfolgte die Subtraktion des Tastsignals 23 und des Beschleunigungssignals 67 im Zeitbereich. In einer grundsätzlich zweiten Arbeitsweise der Signalverarbeitung nach Figur 11 wird die Subtraktion des Tastsignals 23 und des Beschleunigungssignals 67 im Frequenzbereich durchgeführt. Dazu wird sowohl das Tastsignal 23 des Tastsensors 7, als auch das Beschleunigungssignal 67 des Beschleunigungssensors 65 innerhalb der Tastkopflogik 28 durch entsprechende Mikroprozessoren fouriertransformiert. Erst danach findet die Subtraktion des fouriertransformierten Tastsignals 23 und des fouriertransformierten Beschleunigungssignal 67 statt, wie dies im Folgenden anhand der Figuren 12 bis 17 für eine gültige Antastung näher erläutert wird.

So zeigt Figur 12 das digitalisierte Tastsignal 23 des Tastsensors 7 und Figur 13 das korrespondierende digitalisierte Beschleunigungssignal 67 des Beschleunigungssensors 65 bei einer regulären Antastung des Werkstückes 70. Wie hieraus zu sehen erzeugt der Tastsensor 7 durch die Antastung ein Tastsignal 23 mit einer großen Amplitude, während die Amplitude des Beschleunigungssignals 67 des Beschleunigungssensors 65 sehr klein ist. Das digitalisierte Tastsignal 23 des Tastsensors 7 wird durch den Mikroprozessor der Antastlogik 28 in ein fouriertransformiertes Tastsignal gemäß Figur 14 transformiert. Das digitalisierte Beschleunigungssignal 67 des Beschleunigungssensors 65 wird durch den Mikroprozessor der Antastlogik 28 in ein fouriertransformiertes Beschleunigungssignal gemäß Figur 15 transformiert. Danach werden die beiden Signale voneinander subtrahiert, wodurch das in Figur 16 zu sehende Auswertesignal mit relativ großen Amplituden bei bestimmten Frequenzen entsteht. Die Subtraktion erfolgt Frequenzweise, das heißt, die Amplitude einer bestimmten Frequenz im fouriertransformierten Beschleunigungssignal 67 wird von der Amplitude einer entsprechenden Frequenz im fouriertransformierten Tastsignal 23 subtrahiert. Aufgrund dieser Amplituden des in Figur 16 gezeigten Auswertesignals wird eine vordefinierte Triggerschwelle überschritten, so dass in der Tastkopflogik 28 das oben erwähnte Signal NIM, das in Figur 17 durch die durchgezogene Linie dargestellt ist, erzeugt wird. Zur Überprüfung, ob das Auswertesignal eine vordefinierte Triggerschwelle überschreitet wird im vorliegenden Fall geprüft, ob die Amplitude wenigstens einer Frequenz eine vordefinierte Triggerschwelle überschreitet. Alternativ könnten aber auch selektiv die Amplituden eines vordefinierten Frequenzbandes daraufhin überprüft werden, ob eine vordefinierte Triggerschwelle überschritten wird.

Zu diesem Zeitpunkt, zu dem die vordefinierte Triggerschwelle durch das Auswertesignal überschritten wird, wird wie oben bereits ausgeführt, der rollierende Speicher in der Tastkopflogik 28 und auch der rollierende Speicher 36 über die Signalleitung 37 "eingefroren". Das Schaltsignal 13 aus den sich noch etwas später öffnenden Lagerstellen 6 des Tastkopfs, auf das die Tastkopflogik 28 jetzt wartet, ist in Figur 17 als strichliniertes Signal mit der Bezeichnung "MECHK" eingezeichnet. Nachdem nunmehr beide Signale während eines überlappenden Zeitraums vorhanden sind, gibt die Tastkopflogik 28 den Antastvorgang "gültig" und schickt einen entsprechenden Signalimpuls über die Signalleitung 39 an einen Digitaleingang des Mikroprozessors 20, der die Signale, wie oben beschrieben, weiterverarbeitet. Die Triggerbedingungen "Überschreiten der vordefinierten Schwelle durch das Auswertesignal", "Vorliegen des Schaltsignals 13 (MECHK)" und "Überschreiten der Schwelle durch das Auswertesignal und Vorliegen des Schaltsignals 13 (MECHK) in einem vordefinierten Zeitraum" sind hiermit also erfüllt.

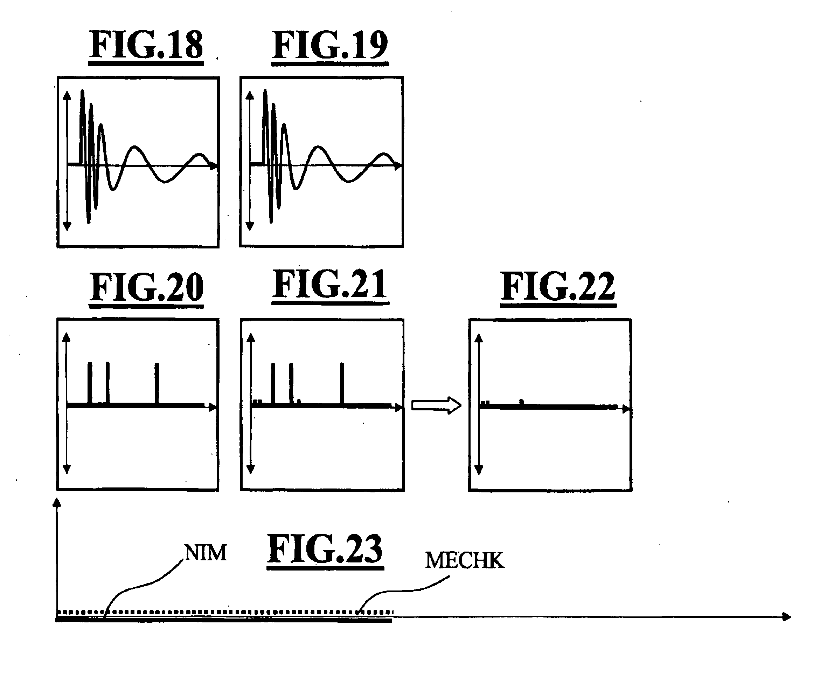

Im Falle einer fehlerhaften Antastung ergibt sich das, was in den Figuren 18 bis 23 dargestellt ist. Hier wird gezeigt, was passiert, sofern Störungen, wie Schwingungen durch schlechte Antriebe des Koordinatenmessgerätes oder Schall den Tastkopf 4 mit dem hieran befestigten Taster 74 zu Schwingungen anregen. So zeigt Figur 18 das digitalisierte Tastsignal 23 des Tastsensors 7 und Figur 19 das korrespondierende digitalisierte Beschleunigungssignal 67 des Beschleunigungssensors 65. Wie hieraus zu sehen erzeugt der Tastsensor 7 durch die besagten Beschleunigungen ein Signal mit einer großen Amplitude. Diesmal erzeugt jedoch auch der Beschleunigungssensor 65 eine relativ große Amplitude. Das digitalisierte Signal 23 des Tastsensors 7 wird durch den Mikroprozessor der Antastlogik 28 in ein fouriertransformiertes Tastsignal gemäß Figur 20 transformiert. Das digitalisierte Beschleunigungssignal 67 des Beschleunigungssensors 65 wird ebenfalls durch den Mikroprozessor der Antastlogik 28 in ein fouriertransformiertes Beschleunigungssignal gemäß Figur 21 transformiert. Wie hieraus zu sehen ist, sind die Frequenzspektren des fouriertransformierten Tastsignals (Figur 20) und des fouriertransformierten Beschleunigungssignals (Figur 21) sehr ähnlich, was daran liegt, dass die störenden Beschleunigungen auf den Taster 74 und auf den Massekörper 56 gleich sind und daher im Messgrößenaufnehmer 7 des Tastsensors 7 und im Messgrößenaufnehmer 55 des Beschleunigungssensors 65 sehr ähnliche Signale verursachen.

Danach werden die beiden fouriertransformierten Signale voneinander subtrahiert, wodurch das in Figur 22 zu sehende Signal mit sehr geringen Amplituden entsteht. Aufgrund dieser kleinen Amplituden wird die vordefinierte Triggerschwelle gerade nicht überschritten, so dass in der Tastkopflogik 28 das oben erwähnte Signal NIM, das in Figur 23 durch die durchgezogene Linie dargestellt ist, nicht auftritt. Damit wird im vorliegenden Fall eine Antastung nicht angenommen.

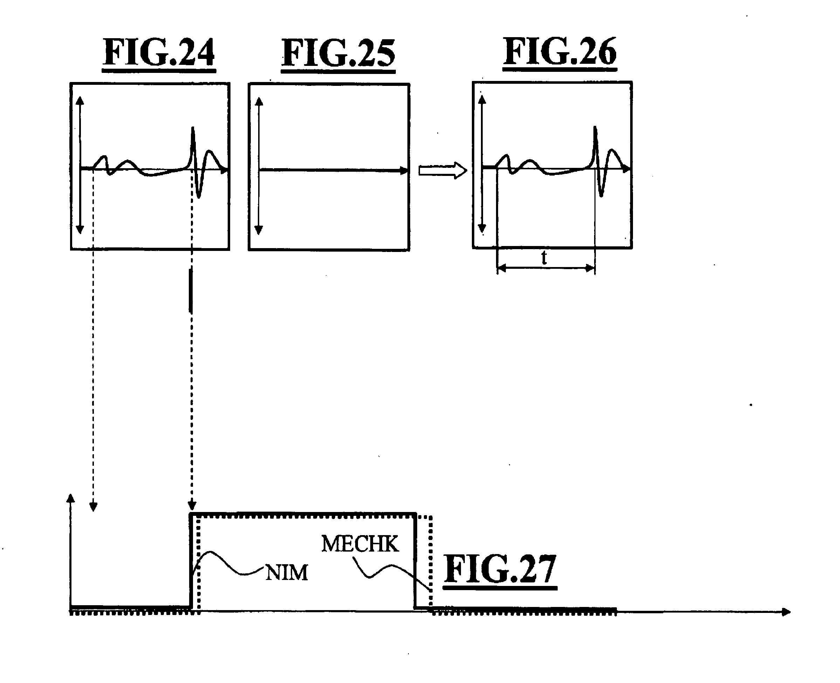

Die oben im Zusammenhang mit Figur 2 und Figur 11 beschriebenen Ausführungsbeispiele können noch wie folgt weitergebildet werden, wie dies Anhand der Figuren 24 bis 27 zu sehen ist. Wie oben bereits ausgeführt, übersteigt bei einem üblichen gültigen Antastvorgang das Auswertesignal, das durch Subtraktion des Tastsignals 23 vom Tastsensor 7 mit dem Beschleunigungssignal 67 des Beschleunigungssensors 65 erzeugt wurde eine in der Tastkopflogik 28 gesetzte Schwelle zu einem Zeitpunkt, der hinreichend genau dem eigentlichen Antastzeitpunkt entspricht. Es gibt jedoch auch Fälle, in denen im Zeitpunkt der Antastung ein so schwaches Tastsignal erzeugt wird, dass die in der Tastkopflogik gesetzte Schwelle nicht im Zeitpunkt der Antastung überschritten wird, sondern erst später bei der Öffnung der Lagerstellen 6 des Tastkopfs 4, wenn das Schaltsignal 13 (MECHK) abgegeben wird. Grund hierfür können ungünstige Antastrichtungen oder lange, dünne Taststifte oder Antastungen auf weichem Material sein.

In einem solchen Fall ist es sinnvoll das in unserem US-Patent US 5,862,604 beschriebene Verfahren zur Ermittlung korrigierter Messwerte anzuwenden. Hierzu gibt es folgende Dinge anzumerken. Im US-Patent wird das Tastsignal des Tastsensors (Piezosensor) ausgewertet, um hieraus den konkreten Zeitpunkt der Antastung zu ermitteln. Im Gegensatz hierzu wird im Zusammenhang mit unserer Erfindung stattdessen das Auswertesignal (in Figur 2 das Bezugszeichen 69, in Figur 11 kein Bezugszeichen) entsprechend ausgewertet. Darüber hinaus ist im US-Patent eine Gleichrichtung des auszuwertenden Tastsignals vorgesehen. Im Gegensatz hierzu wird das Auswertesignal (in Figur 2 das Bezugszeichen 69, in Figur 11 kein Bezugszeichen) nicht gleichgerichtet. Eine Gleichrichtung des Auswertesignals wäre im vorliegenden Fall ohne weiteres möglich, wenn dies gewünscht wird. Allerdings ist eine Gleichrichtung zur Durchführung des in dem US-Patent beschriebenen Verfahrens überhaupt nicht erforderlich und daher überflüssig.

Bei der Anwendung des aus dem US-Patent US 5,862,604 beschriebenen Verfahrens in einer der in Figur 2 oder 11 beschriebenen Schaltungen wird im Mikroprozessor 20 eine Korrekturfunktion vorgesehen, die wie folgt arbeitet. Die Korrekturfunktion ist so realisiert, dass nun nicht der Zeitpunkt, zu dem das Auswertesignal die in der Tastkopflogik 28 vorgesehene Schwelle überschritten hat als Zeitpunkt der Antastung gewertet wird, sondern vielmehr wird aus dem Auswertesignal selber der Zeitpunkt der tatsächlichen Antastung abgeleitet, indem das Auswertesignal nach der Zeit differenziert wird und aus der ersten oder höheren Ableitungen des Auswertesignals der genaue Antastzeitpunkt ermittelt wird. Es werden dann die zu diesem Zeitpunkt vorliegenden Messwerte aus dem Speicher 30 ermittelt und als Maßstabswerte x, y und z zur weiteren Verarbeitung ausgegeben.

Das Einschalten der Korrekturfunktion erfolgt hierbei, wie nachfolgend anhand der Figuren 24 bis 27 für eine gültige Antastung näher erläutert. So zeigt Figur 24 das Tastsignal 23 des Tastsensors 7 und Figur 25 das korrespondierende Beschleunigungssignal 67 des Beschleunigungssensors 65 bei einer regulären Antastung des Werkstückes70. Durch die Subtraktion der beiden Signale entsteht das in Figur 26 zu sehende Auswertesignal. Wie hieraus zu sehen, weist dieses Auswertesignal am Anfang eine ziemlich kleine Amplitude auf. Dies ist der Zeitpunkt der tatsächlichen Antastung. Die Amplitude ist in diesem Augenblick jedoch so gering, dass die Schwelle in der Tastkopflogik 28 nicht überschritten wird. Später dann ist eine größere Amplitude vorhanden. Diese Amplitude liegt etwa zum Zeitpunkt der Öffnung der Lagerstellen 6 des Tastkopfs 4, also dem Zeitpunkt, zu dem das Schaltsignal 13 (MECHK) entsteht. Zu diesem Zeitpunkt überschreitet das Auswertesignal die in der Tastkopflogik 28 gesetzte Schwelle, sodass innerhalb der Tastkopflogik 28 das in Figur 27 als durchgezogene Linie sichtbare Signal NIM generiert wird, wobei zu diesem Zeitpunkt, wie oben bereits ausgeführt, der rollierende Speicher in der Tastkopflogik 28 und auch der rollierende Speicher 36 über die Signalleitung 37 "eingefroren" werden. Das Schaltsignal 13 (auch als MECHK bezeichnet) aus den sich noch etwas später öffnenden Lagerstellen 6 des Tastkopfs 4, auf das die Tastkopflogik 28 jetzt wartet, ist in Figur 27 als strichliniertes Signal mit der Bezeichnung "MECHK" eingezeichnet. Die Tastkopflogik 28 stellt nunmehr fest, dass der zeitliche Beginn des Signals NIM und der zeitliche Beginn des Signals MECHK einen vordefinierten zeitlichen Abstand unterschritten haben. Der Beginn des Signals "NIM" und der Beginn des Signals "MECHK" liegen also sehr dicht beieinander, so dass folglich der tatsächliche Zeitpunkt der Antastung deutlich vor dem durch die Tastkopflogik 28 festgestellten Zeitpunkt (das Auswertesignal überschreitet die in der Tastkopflogik 28 gesetzte Schwelle) liegt. Daraufhin aktiviert die Tastkopflogik 28 die oben beschriebene Korrekturfunktion. Diese ermittelt dann aus dem Auswertesignal den Zeitraum t (siehe in Figur 26 den mit dem Bezugszeiten t versehenen Pfeil), um den der tatsächliche Antastzeitpunkt gegenüber dem durch die Tastkopflogik 28 ermittelten Antastzeitpunkt zurückliegt und gibt die entsprechenden korrigierten Maßstabswerte x, y und z aus.

## Patentansprüche

1. Verfahren zur Koordinatenmessung an Werkstücken auf einem Koordinatenmessgerät mit einem Tastkopf (4), der einen Taster (74) und einen dem Taster zugeordneten Tastsensor (7) enthält, der bei Berührung eines Werkstückes (70) mit dem Taster ein Tastsignal (23) erzeugt, anhand dessen Maßstabswerte (x, y und z) ermittelt werden, die die Position des Tastkopfes bei der Berührung des Werkstückes repräsentieren, wobei der Tastkopf zusätzlich einen Beschleunigungssensor (65) enthält, der bei Beschleunigungen des Tastkopfes ein Beschleunigungssignal (67) erzeugt, wobei das Tastsignal und das Beschleunigungssignal zur Auswertung einer Steuer- und Auswerteeinheit (68) zugeführt werden, und wobei die Steuer- und Auswerteeinheit die besagten Maßstabswerte in der Weise ermittelt, indem durch Subtraktion des Tastsignals und des Beschleunigungssignals voneinander ein Auswertesignal (69) ermittelt wird, und erst anhand dieses Auswertesignals die Maßstabswerte ermittelt werden, die die Position des Tastkopfes bei der Berührung des Werkstückes repräsentieren.

2. Verfahren nach Anspruch 1, wobei die Subtraktion des Tastsignals und des Beschleunigungssignals in der Steuer- und Auswerteeinheit durch einen analogen Subtrahierverstärker (66) erfolgt.

3. Verfahren nach Anspruch 1, wobei die Subtraktion des Tastsignals und des Beschleunigungssignals in der Steuer- und Auswerteeinheit in digitaler Form erfolgt.

4. Verfahren nach Anspruch 1, wobei die Steuer- und Auswerteeinheit das Tastsignal und das Beschleunigungssignal zunächst fourriertransformiert und das Auswertesignal durch Subtraktion des fourriertransformierten Tastsignals und des fourriertransformierten Beschleunigungssignals erzeugt wird.

5. Verfahren nach einem der vorhergehenden Ansprüche, wobei die Steuer- und Auswerteeinheit zur Feststellung einer Antastung das durch die Subtraktion ermittelte Auswertesignal mit wenigstens einer vordefinierten Triggerbedingung vergleicht.

6. Verfahren nach einem der vorhergehenden Ansprüche, wobei die Steuer- und Auswerteeinheit eine Korrekturfunktion aufweist, die aus dem Verlauf des Auswertesignals (69) den tatsächlichen Antastzeitpunkt der Antastung ermittelt, der vor dem Zeitpunkt liegt, an dem das Auswertesignal (69) eine vordefinierte Triggerbedingung erfüllt, wobei die Steuer- und Auswerteeinheit anhand dieses Antastzeitpunktes die Maßstabswerte ermittelt, die die Position des Tastkopfes bei der Berührung des Werkstückes repräsentieren.

7. Verfahren nach Anspruch 6, wobei der Taster (74) auslenkbar am Tastkopf (4) gelagert ist und ein Schaltelement (6) vorgesehen ist, das bei einer Auslenkung des Tasters ein Schaltsignal (13) abgibt und wobei die Steuer- und Auswerteeinheit die Korrekturfunktion genau dann einschaltet, wenn die zeitliche Differenz des Zeitpunktes, zu dem das Auswertesignal (69) eine Triggerbedingung erfüllt und des Zeitpunktes, zu dem das Schaltsignal (13) abgegeben wird einen vordefinierten Wert unterschreitet.

8. Verfahren nach einem der vorhergehenden Ansprüche, wobei der Messgrößenaufnehmer (7) des Tastsensors (7) und der Messgrößenaufnehmer (55) des Beschleunigungssensors (65) gleichartig sind.

9. Verfahren nach einem der vorhergehenden Ansprüche, wobei der Beschleunigungssensor (65) einen Massekörper (56) aufweist, dessen Beschleunigung durch den Messgrößenaufnehmer (55) des Beschleunigungssensors bestimmt wird, wobei die Masse des Massekörpers (56) der Masse des Tasters (74) entspricht.

10. Verfahren nach einem der vorhergehenden Ansprüche, wobei der Messgrößenaufnehmer (55) des Beschleunigungssensors und der Messgrößenaufnehmer (7) des Tastsensors (7) dieselbe Orientierung aufweisen.

11. Koordinatenmessgerät zur Vermessung von Werkstücken umfassend:
- einen Tastkopf (4), mit einem Taster (74), einem Tastsensor (7), der bei Berührung des Tasters (74) an einem Werkstück (70) ein Tastsignal (23) erzeugt und einem Beschleunigungssensor (65), der bei Beschleunigungen des Tastkopfes (4) ein Beschleunigungssignal (67) erzeugt
- eine Mechanik (71, 72, 73), über die der Tastkopf (4) relativ zum Werkstück (70) bewegt werden kann, mit Maßstäben (31, 41 und 51), aus denen Maßstabswerte (x,y und z) ermittelt werden können, die die Position des Tastkopfes repräsentieren
- eine Steuer- und Auswerteeinheit (68), die dazu eingerichtet ist diejenigen Maßstabswerte zu ermitteln, die die Position des Tastkopfes bei der Berührung des Werkstückes repräsentieren, indem durch Subtraktion des Tastsignals und des Beschleunigungssignals voneinander ein Auswertesignal (69) ermittelt wird, und erst anhand dieses Auswertesignals die Maßstabswerte ermittelt werden, die die Position des Tastkopfes bei der Berührung des Werkstückes repräsentieren.

12. Koordinatenmessgerät nach Anspruch 11, wobei die Steuer- und Auswerteeinheit dazu eingerichtet ist, das Verfahren nach wenigstens einem der Ansprüche 2 bis 6 durchzuführen.

13. Koordinatenmessgerät nach Anspruch 11, dessen Steuer- und Auswerteeinheit dazu eingerichtet ist das Verfahren nach Anspruch 6 auszuführen, wobei der Taster (74) auslenkbar am Tastkopf (4) gelagert ist und ein Schaltelement (6) vorgesehen ist, das bei einer Auslenkung des Tasters ein Schaltsignal (13) abgibt und wobei die Steuer- und Auswerteeinheit die Korrekturfunktion genau dann einschaltet, wenn die zeitliche Differenz des Zeitpunktes, zu dem das Auswertesignal (69) eine Triggerbedingung erfüllt und des Zeitpunktes, zu dem das Schaltsignal (13) abgegeben wird einen vordefinierten Wert unterschreitet.

14. Koordinatenmessgerät nach einem der vorhergehenden Ansprüche 11 bis 13, wobei der Messgrößenaufnehmer (7) des Tastsensors (7) und der Messgrößenaufnehmer (55) des Beschleunigungssensors (65) gleichartig sind.

15. Koordinatenmessgerät nach einem der vorhergehenden Ansprüche 11 bis 14, wobei der Beschleunigungssensor (65) einen Massekörper (56) aufweist, dessen Beschleunigung durch den Messgrößenaufnehmer (55) des Beschleunigungssensors (65) bestimmt wird, wobei die Masse des Massekörpers (56) der Masse des Tasters (74) entspricht.

16. Koordinatenmessgerät nach einem der vorhergehenden Ansprüche 11 bis 15, wobei der Beschleunigungssensor (65) so am Tastkopf (4) befestigt ist, dass der Messgrößenaufnehmer (55) des Beschleunigungssensors (65) dieselbe Orientierung wie der Messgrößenaufnehmer (7) des Tastsensors (7) aufweist.

## Claims

1. Method for workpiece coordinate measurement on a coordinate measuring machine comprising a probe head (4), which includes a probe (74) and a probe sensor (7) which is assigned to the probe and, upon touching a workpiece (70) with the probe, generates a probe signal (23) with the aid of which measures (x, y and z) are determined which represent the position of the probe head when touching the workpiece, the probe head additionally including an acceleration sensor (65) which generates an acceleration signal (67) upon accelerations of the probe head, the probe signal and the acceleration signal being fed for evaluation to a control and evaluation unit (68), and the control and evaluation unit determining said measures in such a way that an evaluation signal (69) is determined by subtracting the probe signal and the acceleration signal from one another, and the measures which represent the position of the probe head when touching the workpiece are not determined until said evaluation signal is available.

2. Method according to Claim 1, in which the subtraction of the probe signal and the acceleration signal is performed in the control and evaluation unit by an analogue subtractor amplifier (66).

3. Method according to Claim 1, in which the subtraction of the probe signal and the acceleration signal is performed digitally in the control and evaluation unit.

4. Method according to Claim 1, in which the control and evaluation unit firstly subjects the probe signal and the acceleration signal to Fourier transformation, and the evaluation signal is generated by subtracting the probe signal after Fourier transformation and the acceleration signal after Fourier transformation.

5. Method according to one of the preceding claims, in which in order to establish a scan the control and evaluation unit compares the evaluation signal determined by the subtraction with at least one predefined trigger condition.

6. Method according to one of the preceding claims, in which the control and evaluation unit has a correction function which determines from the profile of the evaluation signal (69) the actual scanning instant of the scan which is ahead of the instant at which the evaluation signal (69) satisfies a predefined trigger condition, the control and evaluation unit determining with the aid of said scanning instant the measures which represent the position of the probe head when touching the workpiece.

7. Method according to Claim 6, in which the probe (74) is deflectively mounted on the probe head (4), and a switching element (6) is provided which, upon a deflection of the probe, outputs a switching signal (13), and in which the control and evaluation unit switches on the correction function precisely when the time difference between the instant at which the evaluation signal (69) satisfies a trigger condition and the instant at which the switching signal (13) is output undershoots a predefined value.

8. Method according to one of the preceding claims, in which the measured variable sensor (7) of the probe sensor (7) and the measured variable sensor (55) of the acceleration sensor (65) are of the same type.

9. Method according to one of the preceding claims, in which the acceleration sensor (65) has a mass body (56) whose acceleration is determined by the measured variable sensor (55) of the acceleration sensor, the mass of the mass body (56) corresponding to the mass of the probe (74).

10. Method according to one of the preceding claims, in which the measured variable sensor (55) of the acceleration sensor and the measured variable sensor (7) of the probe sensor (7) have the same orientation.

11. Coordinate measuring machine for measuring workpieces, comprising:
- a probe head (4) with a probe (74), a probe sensor (7), which generates a probe signal (23) when the probe (74) touches a workpiece (70), and an acceleration sensor (65) which generates an acceleration signal (67) upon accelerations of the probe head (4),
- a mechanism (71, 72, 73) via which the probe head (4) can be moved relative to the workpiece (70), having scales (31, 41 and 51) from which it is possible to determine measures (x, y and z) which represent the position of the probe head, and
- a control and evaluation unit (68) which is set up to determine those measures which represent the position of the probe head when touching the workpiece, by virtue of the fact that an evaluation signal (69) is determined by subtracting the probe signal and the acceleration signal from one another, and the measures which represent the position of the probe head when touching the workpiece are not determined until said evaluation signal is available.

12. Coordinate measuring machine according to Claim 11, in which the control and evaluation unit! is set up to carry out the method according to at least one of Claims 2 to 6.

13. Coordinate measuring machine according to Claim 11, whose control and evaluation unit is set up to execute the method according to Claim 6, the probe (74) being mounted deflectively on the probe head (4), and a switching element (6) is provided which, upon a deflection of the probe, outputs a switching signal (13), and in which the control and evaluation unit switches on the correction function precisely when the time difference between the instant at which the evaluation signal (69) satisfies a trigger condition and the instant at which the switching signal (13) is output undershoots a predefined value.

14. Coordinate measuring machine according to one of the preceding Claims 11 to 13, in which the measured variable sensor (7) of the probe sensor (7) and the measured variable sensor (55) of the acceleration sensor (65) are of the same type.

15. Coordinate measuring machine according to one of the preceding Claims 11 to 14, in which the acceleration sensor (65) has a mass body (56) whose acceleration is determined by the measured variable sensor (55) of the acceleration sensor (65), the mass of the mass body (56) corresponding to the mass of the probe (74).

16. Coordinate measuring machine according to one of the preceding Claims 11 to 15, in which the acceleration sensor (65) is fastened on the probe head (4) in such a way that the measured variable sensor (55) of the acceleration sensor (65) has the same orientation as the measured variable sensor (7) of the probe sensor (7).

## Revendications

1. Procédé de mesure de coordonnées de pièces à usiner sur un appareil de mesure de coordonnées comportant une tête de palpeur (4), contenant un palpeur (74) et un capteur de palpeur (7) associé au palpeur, qui génère un signal de palpeur (23) lors d'un contact d'une pièce à usiner (70) avec le palpeur, au moyen desquels on détermine des valeurs de mesure (x, y et z) qui représentent la positon de la tête de palpage lors du contact de la pièce à usiner, dans lequel la tête de palpage contient en outre un capteur d'accélération (65) qui génère un signal d'accélération (67) lors d'accélérations de la tête de palpage, dans lequel le signal de palpage et le signal d'accélération sont délivrés à une unité de commande et d'évaluation (68) pour effectuer une évaluation, et dans lequel l'unité de commande et d'évaluation détermine lesdites valeurs de mesure de telle manière qu'un signal d'évaluation (69) soit déterminé par soustraction du signal de palpage et du signal d'accélération l'un de l'autre, et que les valeurs de mesure qui représentent la position de la tête de palpage lors du contact de la pièce à usiner soient tout d'abord déterminées sur la base de ce signal d'évaluation.

2. Procédé selon la revendication 1, dans lequel la soustraction du signal de palpage et du signal d'accélération dans l'unité de commande et d'évaluation s'effectue au moyen d'un amplificateur soustracteur analogique (66).

3. Procédé selon la revendication 1, dans lequel la soustraction du signal de palpage et du signal d'accélération dans l'unité de commande et d'évaluation s'effectue sous forme numérique.

4. Procédé selon la revendication 1, dans lequel l'unité de commande et d'évaluation soumet tout d'abord à une transformation de Fourier le signal de palpage et le signal d'accélération et dans lequel le signal d'évaluation est généré par soustraction du signal de palpage soumis à la transformation de Fourier et du signal d'accélération soumis à la transformation de Fourier.

5. Procédé selon l'une quelconque des revendications précédentes, dans lequel l'unité de commande et d'évaluation compare le signal d'évaluation déterminé par la soustraction à au moins une condition de déclenchement prédéfinie pour constater qu'il se produit un palpage.

6. Procédé selon l'une quelconque des revendications précédentes, dans lequel l'unité de commande et d'évaluation comprend une fonction de correction qui, à partir de l'évolution du signal d'évaluation (69), détermine l'instant de palpage effectif du palpage qui se situe avant l'instant lors duquel le signal d'évaluation (69) remplit une condition de déclenchement prédéterminée, dans lequel l'unité de commande et d'évaluation détermine, sur la base de cet instant de palpage, les valeurs de mesure qui représentent la position de la tête de palpage lors du contact de la pièce à usiner.

7. Procédé selon la revendication 6, dans lequel le palpeur (74) est monté de manière à pouvoir être dévié sur la tête de palpage (4) et dans lequel il est prévu un élément de commutation (6) qui délivre un signal de commutation (13) lors d'une déviation du palpeur et dans lequel l'unité de commande et d'évaluation n'active la fonction de correction que si la différence temporelle entre l'instant lors duquel le signal d'évaluation (69) remplit une condition de déclenchement et l'instant lors duquel le signal de commutation (13) est délivré s'abaisse en dessous d'une valeur prédéfinie.

8. Procédé selon l'une quelconque des revendications précédentes, dans lequel le transducteur de mesure (7) du capteur de palpage (7) et le transducteur de mesure (55) du capteur d'accélération (65) sont de même type.

9. Procédé selon l'une quelconque des revendications précédentes, dans lequel le capteur d'accélération (65) comprend un corps massif (56) dont l'accélération est déterminée par le transducteur de mesure (55) du capteur d'accélération, dans lequel la masse du corps massif (56) correspond à la masse du palpeur (74).

10. Procédé selon l'une quelconque des revendications précédentes, dans lequel le transducteur de mesure (55) du capteur d'accélération et le transducteur de mesure (7) du capteur de palpage (7) présentent la même orientation.

11. Appareil de mesure de coordonnées destiné à mesurer des pièces à usiner, comprenant :
- une tête de palpage (4) comportant un palpeur (74), un capteur de palpage (7) qui génère un signal de palpage (23) lors d'un contact du palpeur (74) avec une pièce à usiner (70) et un capteur d'accélération (65) qui génère un signal d'accélération (67) lors d'accélérations de la tête de palpage (4),
- une mécanique (71, 72, 73) au moyen de laquelle la tête de palpage (4) peut être déplacée par rapport à la pièce à usiner (70), comportant des règles graduées (31, 41 et 51) à partir desquelles on peut déterminer des valeurs de mesure (x, y et z) qui représentent la position de la tête de palpage,
- une unité de commande et d'évaluation (68) qui est conçue pour déterminer les valeurs de mesure qui représentent la position de la tête de palpage lors du contact de la pièce à usiner en faisant en sorte qu'un signal d'évaluation (69) soit déterminé par soustraction du signal de palpage et du signal d'accélération l'un de l'autre, et que les valeurs de mesure qui représentent la position de la tête de palpage lors du contact de la pièce à usiner soient tout d'abord déterminées sur la base de ce signal d'évaluation.

12. Appareil de mesure de coordonnées selon la revendication 11, dans lequel l'unité de commande et d'évaluation est conçue pour mettre en oeuvre le procédé selon au moins l'une des revendications 2 à 6.

13. Appareil de mesure de coordonnées selon la revendication 11, dont l'unité de commande et d'évaluation est conçue pour mettre en oeuvre le procédé selon la revendication 6, dans lequel le palpeur (74) est monté sur la tête de palpage (4) de manière à pouvoir être dévié et dans lequel il est prévu un élément de commutation (6) qui délivre un signal de commutation (13) lors d'une déviation du palpeur et dans lequel l'unité de commande et d'évaluation n'active la fonction de correction que si la différence temporelle entre l'instant lors duquel le signal d'évaluation (69) remplit une condition de déclenchement et l'instant lors duquel le signal de commutation (13) est délivré s'abaisse en dessous d'une valeur prédéfinie.

14. Appareil de mesure de coordonnées selon l'une quelconque des revendications 11 à 13 précédentes, dans lequel le transducteur de mesure (7) du capteur de palpage (7) et le transducteur de mesure (55) du capteur d'accélération (65) sont de même type.

15. Appareil de mesure de coordonnées selon l'une quelconque des revendications 11 à 14 précédentes, dans lequel le capteur d'accélération (65) comprend un corps massif (56) dont l'accélération est déterminée par le transducteur de mesure (55) du capteur d'accélération (65), dans lequel la masse du corps massif (56) correspond à la masse du palpeur (74).

16. Appareil de mesure de coordonnées selon l'une quelconque des revendications 11 à 15 précédentes, dans lequel le capteur d'accélération (65) est fixé à la tête de palpage (4) de telle manière que le transducteur de mesure (55) du capteur d'accélération (65) présente la même orientation que le transducteur de mesure (7) du capteur de palpage (7).
